**Europäisches Patentamt**

**European Patent Office**

**Office européen des brevets**

(19)

(11) Veröffentlichungsnummer: **0 303 919 B1**

(12) # EUROPÄISCHE PATENTSCHRIFT

(45) Veröffentlichungstag der Patentschrift: **20.01.93**

(21) Anmeldenummer: **88112832.6**

(22) Anmeldetag: **06.08.88**

(51) Int. Cl.5: **C08L 25/02**, C08L 25/10, C08L 25/12, C08K 7/14, //(C08L25/02,25:02),(C08L25/10, 25:10)

(54) **Verstärkte thermoplastische Formmassen, Verfahren zu deren Herstellung und ihre Verwendung.**

(30) Priorität: **21.08.87 DE 3727928**

(43) Veröffentlichungstag der Anmeldung: **22.02.89 Patentblatt 89/08**

(45) Bekanntmachung des Hinweises auf die Patenterteilung: **20.01.93 Patentblatt 93/03**

(84) Benannte Vertragsstaaten: **BE DE FR GB IT NL**

(56) Entgegenhaltungen: **EP-A- 0 200 184** **FR-A- 2 127 531**

(73) Patentinhaber: **BASF Aktiengesellschaft Carl-Bosch-Strasse 38 W-6700 Ludwigshafen(DE)**

(72) Erfinder: **Seiler, Erhard, Dr. Erpolzheimer Strasse 1 W-6700 Ludwigshafen(DE)** Erfinder: **McKee, Graham Edmund, Dr. Kastanienweg 8 W-6940 Weinheim(DE)** Erfinder: **Scharf, Bernhard, Dr. Branichstrasse 3 W-6905 Schriesheim(DE)**

EP 0 303 919 B1

## Beschreibung

Die Erfindung betrifft eine verstärkte thermoplastische Formmasse, bestehend aus, jeweils bezogen auf A + B + C,

A) 40 bis 94 Gew.% eines Copolymeren, bestehend aus, jeweils bezogen auf A,

$a_1$) 90 bis 50 Gew.% Styrol, $\alpha$-Methylstyrol, einem kernalkylsubstituierten Styrolderivat oder Mischungen dieser Monomeren und

$a_2$) 10 bis 50 Gew.% (Meth)acrylnitril und/oder Methyl(meth)acrylat,

B) 20 bis 0,5 Gew.% eines Terpolymerisates, aufgebaut aus, jeweils bezogen auf B;

$b_1$) 90 bis 50 Gew.% mindestens eines Monomeren aus der Gruppe von Styrol, $\alpha$-Methylstyrol, den kernalkylsubstituierten Styrolen oder Mischungen dieser Monomeren,

$b_2$) 5 bis 40 Gew.% (Meth)acrylnitril und/oder Methyl(meth)acrylat

$b_3$) 5 bis 30 Gew.% eines weiteren Monomeren

und

C) 5 bis 50 Gew.% eines Verstärkungsmittels.

Zum Stand der Technik wird die DE-OS 3 515 867 genannt.

In der genannten DE-OS finden sich Angaben zum weiteren Umfeld, worauf hier nur verwiesen wird.

In der DE-OS 3 515 867 sind verstärkte Formmassen beschrieben, die ein Copolymeres, z.B. S/AN, ein Terpolymerisat aus, z.B. Styrol, Acrylnitril und einem Monomeren aus der Gruppe der (Meth)acrylsäure und des Maleinsäureanhydrids und ein Verstärkungsmittel, z.B. Glasfasern, enthalten.

Bei der bekannten Formmasse wird durch die erforderlichen hohen Anteile der Komponente B von ca. 10 % und durch MSA-Gehalte im Terpolymerisat von ebenfalls 10 % eine Gelbverfärbung des Endprodukts hervorgerufen, die störend ist. Außerdem bleiben bei der Schlagzähigkeit und Festigkeit noch Wünsche offen.

Es bestand die Aufgabe, verstärkte thermoplastische Formmassen auf der Basis von Styrol-(Meth)-acrylnitril- und/oder Methyl(meth)acrylat-Copolymerisaten herzustellen, die eine hohe Festigkeit bei gleichzeitig hoher Zähigkeit und hoher Wärmeformbeständigkeit aufweisen und möglichst geringe Zusätze an Terpolymerisat erfordern, um den Gelbstich zu vermeiden.

Die Lösung dieser Aufgabe gelingt dadurch, daß das Terpolymerisat B als Monomeres $b_3$) t.-Butyl-(meth)acrylat enthält.

Die Erfindung betrifft daher eine verstärkte thermoplastische Formmasse, bestehend aus, jeweils bezogen auf A + B + C,

A) 40 bis 94 Gew.% eines Copolymeren, bestehend aus, jeweils bezogen auf A,

$a_1$) 90 bis 50 Gew.% Styrol, $\alpha$-Methylstyrol, einem kernalkylsubstituierten Styrolderivat oder Mischungen dieser Monomeren

und

$a_2$) 10 bis 50 Gew.% (Meth)acrylnitril und/oder Methyl(meth)acrylat,

B) 20 bis 0,5 Gew.% eines Terpolymerisates, aufgebaut aus, jeweils bezogen auf B;

$b_1$) 90 bis 50 Gew.% mindestens eines Monomeren aus der Gruppe von Styrol, $\alpha$-Methylstyrol, den kernalkylsubstituierten Styrolen oder Mischungen dieser Monomeren,

$b_2$) 5 bis 40 Gew.% (Meth)acrylnitril und/oder Methyl(meth)acrylat

$b_3$) 5 bis 30 Gew.% eines weiteren Monomeren

und

C) 5 bis 50 Gew.% eines Verstärkungsmittels. Die Formmasse ist dadurch gekennzeichnet, daß das Terpolymerisat B als weiteres Monomeres $b_3$ t.-Butyl(meth)acrylat enthält.

Es zeigt sich überraschenderweise, daß mit sehr geringen Zusätzen an Terpolymerisat B eine hohe Steifigkeit und gleichzeitig gute Zähigkeit erhalten wird und ein Gelbstich nicht auftritt.

Nachstehend werden der Aufbau der erfindungsgemäßen Formmasse aus den Komponenten, die Herstellung der Komponenten und die der Formmasse beschrieben.

Die Formmasse besteht, jeweils bezogen auf die Formmasse aus A + B + C, zu 40 bis 94 Gew.% vorzugsweise 50 bis 87 Gew.%, insbesondere 55 bis 65 Gew.% der Komponente A, zu 0,5 bis 20 Gew.%, vorzugsweise 0,5 bis 10 Gew.% der Komponente B, zu 5 bis 50 Gew.%, vorzugsweise 15 bis 40 Gew.%, inbesondere 20 bis 40 Gew.% der Komponente C.

Außerdem kann die Formmasse, jeweils bezogen auf 100 Gew.Teile A + B + C, noch enthalten

bis zu 50 Gew.Teile, vorzugsweise 1 bis 50 Gew.Teile und insbesondere 10 bis 40 Gew.Teile der Komponente D, sowie

bis zu 20 Gew.Teilen, insbesondere 0,1 bis 20 Gew.Teile und vorzugsweise 0,1 bis 10 Gew.Teile an Zusatzstoffen (Komponente E).

Komponente A

Als Komponente A der erfindungsgemäßen Formmassen werden Styrol(Meth)acrylnitril-Copolymerisate, Styrol-Methyl(meth)acrylat-Copolymere oder Copolymerisate aus Styrol, Methyl(meth)acrylat und (Meth)-acrylnitril angewendet; diese bestehen im wesentlichen aus Copolymerisaten, die 10 bis 50 Gew.%, insbesondere 20 bis 40 Gew.%. (Meth)acrylnitril und/oder Methyl(meth)acrylat, vorzugsweise Acrylnitril und/oder Methylmethacrylat als Monomere $a_2$), und 50 bis 90 Gew.%, insbesondere 60 bis 80 Gew.%, Styrol, $\alpha$-Methylstyrol und/oder ein kernalkylsubstituiertes Styrol oder deren Mischungen als Monomere $a_1$) einpolymerisiert enthalten. Der Styrolbestandteil kann, um die Wärmeformbeständigkeit zu verbessern, ganz oder teilweise durch $\alpha$-Methylstyrol oder kernalkyliertes Styrol, insbesondere p-Methylstyrol, ersetzt sein. Die besonders bevorzugt angewendeten Styrol-Acrylnitril-Copolymerisate sind im Handel erhältlich und können z.B. nach der Lehre der DE-AS 10 01 001 bzw. DE-PS 1 003 436 hergestellt werden. Der Molekulargewichtsbereich der Copolymerisate kann $M_w = 8 \cdot 10^4$ bis $M_w = 5 \cdot 10^5$ (Gewichtsmittel $M_w$ aus Lichtstreuung) betragen.

Komponente B

Das Terpolymerisat B kann durch Emulsionspolymerisation oder durch kontinuierliche Mischpolymerisation in Lösung hergestellt werden.

Vorzugsweise wird die Technik der Emulsionspolymerisation angewendet.

Die Technik der Emulsionspolymerisation ist an sich bekannt und beschrieben in

1. Ullmann's Encyklopädie der technischen Chemie, Band 19, 4. Auflage, 1980, Seite 132 - 145
2. Encyclopedia of Polymer Science and Engineering

| First Edition | Band 5 | Seite 801 - 859 |
| Second Edition | Band 6 | Seite 1 - 51 |

Dabei werden Feststoffgehalte zwischen 5 und 75 Vol.% verwendet, vorzugsweise zwischen 10 und 65 Vol.%. Als Polymerisationsinitiatoren werden Substanzen, wie Kaliumpersulfat, Natriumpersulfat, organische Peroxide und Azo-Verbindungen, eingesetzt.

Als Emulgatoren können anionische, kationische und amphoterische Typen verwendet werden.

Bei der kontinuierlichen Mischpolymerisatin in Lösung wird das Terpolymere aus den Monomeren $b_1$), $b_2$) und $b_3$) bei hohen Temperaturen unter starkem Rühren hergestellt. Die Monomeren $b_1$), $b_2$) und $b_3$) werden dazu kontinuierlich in ein Polymerisationsgefäß eingebracht und gleichzeitig wird eine diesen Mengen entsprechende Menge des Polymerisationsgemisches aus dem Gefäß abgezogen (vgl. A.W. Hanson, R.L. Zimmermann, Industrial Eng. Chemistry 49, (1957) Seilte 803). Das Monomere $b_1$), das im wesentlichen Styrol und/oder $\alpha$-Methylstyrol ist, aber auch ein kernalkyliertes Styrol, wie p-Methylstyrol oder p-tert.-Butylstyrol, sein kann, ist in Mengen von 50 bis 90 Gew.%, vorzugsweise von 60 bis 85 Gew.%, das Monomere $b_2$) (Meth)acrylnitril und/oder Methyl(meth)acrylat, vorzugsweise Acrylnitril und/oder Methylmethacrylat, in Mengen von 5 bis 40 Gew.%, vorzugsweise 10 bis 30 Gew.% und das Monomere $b_3$), t.-Butyl-(meth)acrylat in Mengen von 2 bis 30 Gew.%, vorzugsweise 5 bis 15 Gew.% im Copolymerisat B enthalten (einpolymerisiert).

Das Terpolymerisat weist Viskositätszahlen im Bereich von 30 bis 150, vorzugsweise von 40 bis 120, gemessen in 0,5 % Lösungen in Dimethylformamid bei 25°C, auf.

Komponente C

Die erfindungsgemäße Formmasse enthält übliche Verstärkungsmittel, wie Glasfasern, Glaskugeln, Mineralfasern, Whisker, Aluminiumoxidfasern, Glimmer, Quarzmehl, Wollastonit etc. Besonders bevorzugt sind glasfaserverstärkte Formmassen, wobei die Glasfasern sowohl als Kurzglasfasern mit einer mittleren Länge von 0,05 bis 1,5 mm oder in Granulatlänge (Glasfaserlänge von 2,0 bis 10 mm) vorliegen können.

Die verwendeten Glasfasern können aus E-, A- oder C-Glas sein. Sie sind vorzugsweise mit einer Schlichte und einem Haftvermittler ausgerüstet. Ihr Durchmesser liegt im allgemeinen zwischen 6 und 20 µm. Es können sowohl Endlosfasern (rovings) als auch Schnittglasfasern mit einer Länge von 1 bis 10 mm, vorzugsweise 3 bis 6 mm, eingesetzt werden.

Komponente D

Die Komponente D sind Pfropfmischpolymerisate, die gegebenenfalls angewendet werden. Diese Pfropfmischpolymerisate sind aufgebaut, jeweils bezogen auf D, aus 10 bis 49 Gew.% vorzugsweise 15 bis 45 Gew.%, eines Gemisches aus mindestens einem vinylaromatischen Monomeren $d_2$), das bis zu 12 Kohlenstoffatome enthält, und 1 bis 49 Gew.%, vorzugsweise 5 bis 40 Gew.%, mindestens eines (Meth)-acrylsäureesters mit $C_1$-$C_8$ Alkylresten und/oder von (Meth)acrylnitril $d_3$) als Pfropfhülle, auf 50 bis 90 Gew.%, insbesondere 60 bis 80 Gew.%, einer elastomeren Pfropfgrundlage (Kautschukkomponente $d_1$).

Die Herstellung der Pfropfmischpolymerisate D ist an sich bekannt. Sie können z.B. hergestellt werden durch Polymerisation eines Gemisches von Styrol und Acrylnitril und/oder (Meth)acrylnitril in Gegenwart eines Kautschuks.

Der Kautschuk $d_1$) soll eine Glastemperatur [nach K.H. Illers und H. Breuer, Kolloid-Zeitschrift 167, (1961), Seite 110] haben, die unter 0°C, vorzugsweise unter -30°C liegt. Als Kautschuk kommen z.B. in Betracht: Polybutadien (vgl. DE-OS 14 20 775 und DE-OS 14 95 089) Copolymerisate aus Butadien und Styrol (vgl. GB-PS 649 166), Polyacrylsäureester (vgl. DE-AS 12 60 135), sowie Copolymerisate aus Acrylsäureester und Butadien (vgl. DE-AW 12 38 207), ferner Elastomere von Copolymerisaten aus Acrylsäureestern mit Styrol, Acrylnitril und Vinylethern und Copolymerisate aus Ethylen, Propylen und einem nicht konjugierten Dien (EPDM-Kautschuke).

Die vinylaromatischen Pfropfmonomeren $d_2$) sind Styrol, $\alpha$-Methylstyrol und/oder kernalkylierte Styrole mit bis zu 12 C-Atomen; als Monomere $d_3$) kommen (Meth)acrylsäurealkylester mit $C_1$-$C_8$-Alkylestern sowie (Meth)acrylnitril oder Mischungen davon in Betracht.

Die Pfropfcopolymerisation kann dabei bekannterweise in Lösung, Suspension oder vorzugsweise in Emulsion erfolgen. Die Weichphase des Pfropfmischpolymerisats weist, bei der bevorzugten Herstellung des Kautschuks und der Pfropfung in Emulsion einen mittleren Teilchendurchmesser ($d_{50}$-Wert der integralen Masseverteilung) von 0,08 $\mu$m auf. In der Regel liegt nach an sich bekannter Vergrößerung der Teilchen, z.B. durch Agglomeration, der $d_{50}$-Wert im Bereich 0,1 bis 0,6 $\mu$m. Bei solchen Pfropfcopolymeri-sationen erfolgt eine zumindest teilweise chemische Verknüpfung der polymerisierenden Monomeren mit dem bereits polymerisierten Kautschuk, wobei die Verknüpfung wahrscheinlich an den im Kautschuk enthaltenden Doppelbindungen erfolgt. Zumindest ein Teil der Monomeren ist also auf den Kautschuk gepfropft.

Der Teil der Monomeren, der nicht auf den Kautschuk gepfropft ist, copolymerisiert für sich. Dieses Copolymerisat kann bei den hier in Rede stehenden Gemischen der Komponente A zugerechnet werden. Man kann den Anteil der gepfropften Monomeren dadurch ermitteln, daß man den Gelgehalt der Pfropfcopolymeren bestimmt.

Das Pfropfcopolymerisat wird in einem Lösungsmittel, z.B. in Methylethylketon gelöst; dabei lösen sich nur die nichtgepfropften, für sich allein copolymerisierten Monomeren. Der Bestandteil D ist, sofern vorhanden, mit für die Schlagzähigkeit der erfindungsgemäßen Formmasse verantwortlich.

Komponente E

Die erfindungsgemäße Formmasse kann von den unter C genannten Verstärkungsmitteln verschiedene Zusatzstoffe aufweisen. Als Zusatzstoffe seien genannt: Pigmente, Farbstoffe, Füllstoffe, Flammschutzmittel, weitere verträgliche Polymere, Antistatika, Antioxidantien und Schmiermittel. Als Füllstoffe kommen z.B. Talkum, Kaolin, calcinierter Kaolin oder Kreide in Frage.

Die erfindungsgemäßen Formmassen werden nach den üblichen, für die Verarbeitung von Thermoplasten bekannten Verfahren z.B. Spritzguß oder Tiefziehen zu Fertigteilen verarbeitet. Sie finden insbesondere Verwendung für Gehäuse von Elektrogeräten, Haushaltsgeräten, Telefonen, für Platten, Rohre, Folien, Kinderspielzeug und im KFZ-Bau.

Herstellung der erfindungsgemäßen Formmassen aus den Komponenten

Die Herstellung der erfindungsgemäßen Formasse kann, wie nachstehend beschrieben, erfolgen: Die Komponente A, B, und gegebenenfalls D werden als Schmelzen bei Temperaturen zwischen 200 und 280°C auf Extrudern, Walzen oder Knetern bei Verweilzeiten von einigen Minuten mit den Verstärkungsmitteln C gemischt. Mann kann aber auch Lösungen der Komponenten A, B und D oder Teilmischungen, z.B. A + B, herstellen, die Lösungsmittel anschließend entfernen (entgasen) und diese Mischungen oder Teilmischungen mit den Verstärkungsmitteln C konfektionieren und dann gegebenenfalls mit den Zusatzstoffen abmischen und nochmals konfektionieren. Das Vermischen der Komponenten A, B und gegebenenfalls D erfolgt vorzugsweise in Gegenwart bzw. unter Zugabe der Verstärkungsmittel C und der Zusatzstoffe E.

Eine besonders bevorzugte Ausführungsform besteht darin, das Terpolymerisat B in Form einer

4

wäßrigen Dispersion (hergestellt durch Emulsionspolymerisation oder durch Sekundärdispersionen des fertigen Polymeren in Pulverform in Wasser unter Zuhilfenahme üblicher Emulgatoren und/oder Suspendierhilfsmittel) direkt auf den Glasfaserstrang zu geben bzw. diesen mit der Dispersion zu tränken und zusammen mit den Glasfasern in eine Öffnung des Extruders in diesen einzutragen und mit der Schmelze der Komponente A zu vereinigen, wobei das enthaltende Wasser verdampft bzw. im Vakuum abgezogen wird.

Die in den Beispielen und Vergleichsversuchen genannten Parameter wurden wie folgt bestimmt:

1. Die Kerbschlagzähigkeit, $a_k$, und Schlagzähigkeit, $a_n$, in [kJ/m$^2$] wurde nach DIN 53 453 an spritzgegossenen Normkleinstäben bei einer Massetemperatur von 260° gemessen.

2. Der Elastizitätsmodul in [N/mm$^2$] wurde gemäß DIN 53 457 bestimmt.

3. Die Viskositätszahlen, VZ, $\eta$sp/c in ml/g wurden bei 25°C in einer 0,5 %igen Lösung in Dimethylformamid gemessen.

4. Der Gelbstich der Produkte wurde visuell an spritzgegossenen Rundscheiben bestimmt.

5. Die Reißfestigkeit, $\sigma_R$, [N/mm$^2$] wurde nach DIN 53 455 bestimmt.

Für die Herstellung der erfindungsgemäßen Formmasse und der Vergleichsproben wurden die nachfolgend beschriebenen Produkte verwendet: (Alle %-Angaben in Gew.%)

Komponente A

S-AN-Copolymerisat; 35 % AN, 65 % Styrol, VZ = 80 (ml/g)

Komponenten $B_1$ bis $B_5$:

| | |
|---|---|
| $B_1$: | S-AN-t.-BA-Terpolymerisat;65 %Styrol, 27,5 % AN;7,5 %t-BA,VZ = 75[ml/g] |
| $B_2$: | S-AN-t.-BA-Terpolymerisat;65 %Styrol, 20,0 %AN;5,0 %t-BA,VZ = 80[ml/g] |
| $B_3$: | S-AN-MSA -Terpolymerisat;68 % Styrol, 22,0 % AN; 10 % MSA,VZ = 70[ml/g] |
| $B_4$: | S-AN-AS -Terpolymerisat;65 % Styrol, 25,0 % AN; 10 % AS ,VZ = 76[ml/g] |
| $B_5$: | S-AN-MAS -Terpolymerisat;65 % Styrol, 25,0 % AN; 10 % MAS,VZ = 78[ml/g] |

Herstellung des Terpolymerisats $B_1$

In einem 1 m$^3$ Rührkessel wurden

| | |
|---|---|
| 300,0 kg | VE Wasser |
| 6,0 kg | $C_{12}$-$C_{18}$ Paraffinsulfonsäure (Emulgator) (40 %ig in Wasser) |
| 0,8 kg | Kaliumpersulfat (Initiator) |

vorgelegt und zweimal mit 7 bar Stickstoff abgepresst. Bei 75 UPM wurde auf 80°C geheizt, ein gerührter Zulauf aus

| | |
|---|---|
| 129,0 kg | Styrol |
| 54,6 kg | Acrylnitril |
| 14,9 kg | t-Butylacrylat |
| 0,7 kg | t-Dodecylmerkaptan |

über 4 Stunden zudosiert und danach 2 Stunden nachpolymerisiert.

Der Feststoffgehalt betrug 39,2 %.

Herstellung der Terpolymerisate $B_2$, $B_4$ und $B_5$

Diese Dispersionen wurden hergestellt wie $B_1$ jedoch mit geänderten Zuläufen

| Dispersion | $B_2$ | $B_4$ | $B_5$ |
|---|---|---|---|
| Styrol | 129,0 | 129,0 | 129,0 kg |
| Acrylnitril | 59,6 | 49,6 | 49,6 kg |
| t-Butylacrylat | 9,9 | - | - kg |
| Acrylsäure | - | 19,9 | - kg |
| Methacrylsäure | - | - | 19,9 kg |
| t-Dodecylmerkaptan | 0,7 | 0,7 | 0,7 kg |
| Feststoffgehalt | 39,1 | 39,1 | 39,3 % |

Das Polymer wurde aus der Dispersion durch Sprühtrocknung als Pulver gewonnen und in dieser Form bei der Herstellung der Endabmischungen eingesetzt.

Herstellung des Styrol/Acrylnitril/Maleinsäureanhydrid-Terpolymerisats $B_3$

Apparatur

Es wurde ein kontinuierlich durchflossener 100 l-Kessel mit Entgasungsextruder verwendet, wobei MSA und AN (Zusammen mit Styrol) in getrennte Zuläufe gegeben wurde. Da sich MSA nicht in Ethylbenzol löst, wurde dem MSA enthaltenden Zulauf MEK als Lösungsmittel zugesetzt.

In dem folgenden Ansatz beträgt die Summe an Gew.% aus Monomeren und Lösungsmitteln 100 %. Starter und Regler sind gesondert zu rechnen.

| | |
|---|---|
| 45,40 % Styrol<br>18,60 % Acrylnitril<br>14,80 % Ethylbenzol<br>0,06 % Porofor N (bezogen auf Monomere)<br>0,15 % t-Dodecylmercaptan (bezogen auf Monomere) | Zulauf I |
| 5,00 % Maleinsäureanhydrid<br>14,80 % Methylethylketon (MEK) | Zulauf II |
| 1,40 % Ethylbenzol | Zulauf III |

Die Polymerisationsbedingungen waren im einzelnen

| | |
|---|---|
| Raum/Zeit-Ausbeute RZA: | 0,143 |
| Temperatur innen: | 94 °C |
| Temperatur Mantel: | 87 °C |
| Zulauf I: | 19,4 l/h |
| Zulauf II: | 4,8 l/h |
| Zulauf III: | 0,4 l/h |
| Feststoffgehalt: | 52 % |
| Umsatz: | 75,4 % |
| Kesselstand: | 80 l |
| Kesseldruck: | 0,3 bar |
| Rührerdrehzahl: | 100 Upm |

Da unter den genannten Polymerisationsbedingungen MSA vollständig einpolymerisiert wird (im Gegensatz zu Styrol und Acrylnitril) mußte das Monomerverhältnis entsprechend angepaßt werden, um die gewünschte Polymerisatzusammensetzung zu erhalten.

eingestellte Monomerzusammensetzung:     65,8 S / 27,0 AN / 7,2 MSA

erhalten wurde:     68 S / 22 AN / 10,0 MSA

Komponente C

E-Glasfasern geschnitten 4,5 mm

Faserdurchmesser 10 $\mu$m
Fabrikat OCF 429

Komponente $D_1$ bis $D_2$

$D_1$: 75 % Polybutadienkautschuk, gepfropft mit 25 % Styrol/Acrylnitril im Verhältnis 70:30, mittlere Teilchengröße 200 nm.

$D_2$: 75 % Polybutylacrylatkautschuk, gepfropft mit 25 % Styrol/Acrylnitril im Verhältnis 75:25, mittlere Teilchengröße 400 nm.

Komponente E

$E_1$: Octabromdiphenylether

$E_2$: Talkum

Die erfindungsgemäßen Formmassen werden in den nachfolgenden Beispielen näher erläutert, ohne daß damit eine Einschränkung vorgenommen werden soll, wobei die angegebenen Prozente Gewichtsprozente sind, sofern nicht anders vermerkt ist.

Beispiele 1 bis 9 und Vergleichsversuche I bis VII

Die Komponenten A, $B_n$, C sowie gegebenenfalls $D_n$ und die Zusatzstoffe $E_n$ der Formmassen wurden in den in den Tabellen 1 und 2 genannten Mengen in einem Fluidmischer vorgemischt und anschließend auf einem Kokneter bei etwa 220 bis 230°C unter Stickstoff innig verknetet. Die Verweilzeit betrug 5 Minuten. Das dabei erhaltene Granulat wurde auf einer Einwellen-Extruder-Schnecke aufgeschmolzen und zu gleichmäßigen, für die Spritzgußverarbeitung geeignetem Granulat abgeschlagen. In der Tabelle 1 sind die Eigenschaften der erhaltenen Mischungen aufgeführt.

Tabelle 1

| Beispiel | Zusammen-setzung Gew.Teile | $a_k$ [kJ/m²] | $a_n$ [kJ/m²] | $\sigma_R$ [N/mm²] | E-modul [N/mm²] | Gelbstich |
|---|---|---|---|---|---|---|
| 1 | 59 A<br>6 $B_1$*)<br>35 C | 5 | 16 | 150 | 13 500 | schwach |
| 2 | 62 A<br>3 $B_1$*)<br>35 C | 6 | 18 | 155 | 13 200 | sehr schwach |
| 3 | 63 A<br>2 $B_1$*)<br>35 C | 6 | 19 | 155 | 13 000 | kaum wahr-nehmbar |
| 4 | 64 A<br>1 $B_1$**)<br>35 C | 6 | 20 | 155 | 13 000 | kein Gelb-stich |
| 5 | 64 A<br>1 $B_2$*)<br>35 C | 6 | 20 | 160 | 13 000 | kein Gelb-stich |
| 6 | 60 A<br>5 B **)<br>35 C | 6 | 18 | 150 | 13 000 | kein Gelb-stich |
| 7 | 60 A<br>5 B1*)<br>15 $D_1$<br>20 C | 10 | 25 | 105 | 6 000 | schwach |
| 8 | 60 A<br>5 B1*)<br>15 $D_2$<br>20 C | 8 | 24 | 98 | 5 800 | schwach |
| 9 | 62 A<br>3 B1**)<br>15 $D_1$<br>20 C | 9 | 26 | 110 | 6 200 | kaum wahrnehmbar |

8

Tabelle 1 (Fortsetzung)

| Ver-gleichs-versuch | Zusammen-setzung Gew.Teile | $a_k$ [kJ/m²] | $a_n$ [kJ/m²] | $\sigma_R$ [N/mm²] | E-modul [N/mm²] | Gelbstich |
|---|---|---|---|---|---|---|
| I | 59 A<br>6 B3*)<br>35 C | 4,5 | 16 | 100 | 13 500 | deutlich sichtbar |
| II | 60 A<br>5 B4*)<br>35 C | 4 | 14 | 140 | 13 300 | deutlich sichtbar |
| III | 60 A<br>5 B5*)<br>35 C | 4 | 15 | 142 | 13 000 | deutlich sichtbar |
| IV | 64 A<br>1 B4*)<br>35 C | 3,5 | 13 | 130 | 13 000 | kaum wahr-nehmbar |
| V | 65 A<br>35 C | 3 | 10 | 120 | 13 000 | kein Gelb-stich |
| VI | 60 A<br>5 B3*)<br>15 D1<br>20 C | 8 | 22 | 98 | 5 800 | deutlich |
| VII | 65 A<br>15 D1<br>20 C | 4 | 14 | 70 | 6 000 | sehr schwach |

*) als Festprodukt eingebracht

**) als Dispersion (ca. 40 %ig) eingebracht (Gew.-Angabe = Festprodukt)

## Patentansprüche

1. Verstärkte thermoplastische Formmasse, bestehend aus, jeweils bezogen auf A + B + C,
   A) 40 bis 94 Gew.% eines Copolymeren, bestehend aus, jeweils bezogen auf A,
      a1) 90 bis 50 Gew.% Styrol, $\alpha$-Methylstyrol, einem kernalkylsubstituierten Styrolderivat oder Mischungen dieser Monomeren und
      a2) 10 bis 50 Gew.% (Meth)acrylnitril und/oder Methyl(meth)acrylat,
   B) 20 bis 0,5 Gew.% eines Terpolymerisates, aufgebaut aus, jeweils bezogen auf B;
      b1) 90 bis 50 Gew.% mindestens eines Monomeren aus der Gruppe von Styrol, $\alpha$-Methylstyrol, den kernalkylsubstituierten Styrolen oder Mischungen dieser Monomeren,
      b2) 5 bis 40 Gew.% (Meth)acrylnitril und/oder Methyl(meth)acrylat
      b3) 2 bis 30 Gew.% eines weiteren Monomeren,
   c) 5 bis 50 Gew.% eines Verstärkungsmittels,

dadurch gekennzeichnet, daß das Terpolymerisat B als weiteres Monomer b₃) Tertiär-butyl(meth)-acrylat enthält.

2. Formmasse nach Anspruch 1, dadurch gekennzeichnet, daß sie zusätzlich, bezogen auf 100 Gew.Teile A + B + C,

1 bis 50 Gew.Teile mindestens eines Pfropfmischpolymerisates D aufweist, das aufgebaut ist aus, jeweils bezogen auf D,
d₁) 50 bis 90 Gew.% mindestens eines Kautschuks mit einer Glastemperatur unterhalb von 0°C,
d₂) 10 bis 49 Gew.% mindestens eines vinylaromatischen Monomeren mit bis zu 12 C-Atomen und
d₃) 49 bis 1 Gew.% eines Monomeren aus der Gruppe von (Meth)acrylnitril und (Meth)-acrylsäureestern mit C₁-C₈-Alkylresten oder Mischungen dieser Monomeren.

3. Formmasse nach Anspruch 1 oder 2, dadurch gekennzeichnet, daß sie, bezogen auf 100 Gew.Teile A + B + C, bis zu 20 Gew.Teile übliche Zusatzstoffe (Komponente E) enthält.

4. Formmasse nach Ansprüchen 1, 2 oder 3, bestehend aus, jeweils bezogen auf A + B + C,
     50 bis 87 Gew.% eines Copolymeren, bestehend aus, jeweils bezogen
     A)
         auf A,
         a1) 80 bis 60 Gew.% Styrol, α-Methylstyrol, einem kernalkylsubstituierten Styrolderivat oder Mischungen dieser Monomeren und
         a2) 20 bis 40 Gew.% (Meth)acrylnitril und/oder Methyl(meth)acrylat,
     B) 10 bis 0,5 Gew.% eines Terpolymerisates, aufgebaut aus, jeweils bezogen auf B;
         b1) 90 bis 50 Gew.% mindestens eines Monomeren aus der Gruppe von Styrol, α-Methylstyrol, den kernalkylsubstituierten Styrolen oder Mischungen dieser Monomeren,
         b2) 5 bis 40 Gew.% (Meth)acrylnitril und/oder Methyl(meth)acrylat
         b3) 5 bis 15 Gew.% eines weiteren Monomeren,
     c) 15 bis 40 Gew.% eines Verstärkungsmittels, dadurch gekennzeichnet,
     daß das Terpolymerisat B als weiteres Monomer b₃) t.-Butyl(meth)acrylat enthält.

5. Verstärkte thermoplastische Formmasse nach Anspruch 1, bestehend aus, jeweils bezogen auf A + B + C,
     A) 55 bis 65 Gew.% eines Copolymeren, bestehend aus, jeweils bezogen auf A,
         a1) 80 bis 60 Gew.% Styrol
         und
         a2) 20 bis 40 Gew.% Acrylnitril
     B) 10 bis 0,5 Gew.% eines Terpolymerisates, aufgebaut aus, jeweils bezogen auf B;
         b1) 85 bis 60 Gew.% Styrol
         b2) 10 bis 30 Gew.% Acrylnitril
         b3) 5 bis 15 Gew.% eines weiteren Monomeren,
     c) 20 bis 40 Gew.% Glasfasern, dadurch gekennzeichnet,
     daß das Terpolymerisat B als weiteres Monomer b₃) t.-Butylacrylat enthält.

6. Verfahren zur Herstellung von Formmassen gemäß Ansprüchen 1, 2 oder 3 durch Abmischen der Komponenten A, B, C und gegebenenfalls D oder E in der Schmelze.

7. Verwendung der Formmasse gemäß Anspruch 1 zur Herstellung von Formteilen.

**Claims**

1. A reinforced thermoplastic molding material consisting of, based in each case on A + B + C,
     A) from 40 to 94% by weight of a copolymer consisting of, based in each case on A,
         a1) from 90 to 50% by weight of styrene, α-methylstyrene, a styrene derivative alkyl-substituted in the nucleus or a mixture of these monomers and
         a2) from 10 to 50% by weight of (meth)acrylonitrile and/or methyl (meth)acrylate,
     B) from 20 to 0.5% by weight of a terpolymer consisting of, based in each case on B,

b1) from 90 to 50% by weight of at least one monomer selected from the group consisting of styrene, $\alpha$-methylstyrene, styrenes alkyl-substituted in the nucleus and mixtures of these monomers,

b2) from 5 to 40% by weight of (meth)acrylonitrile and/or methyl (meth)acrylate and

b3) from 2 to 30% by weight of a further monomer and

C) from 5 to 50% by weight of a reinforcing agent, wherein the terpolymer B contains tert-butyl (meth)acrylate as the further monomer $b_3$).

2. A molding material as claimed in claim 1, which additionally contains, based on 100 parts by weight of A + B + C,

from 1 to 50 parts by weight of at least one graft copolymer D which consists of, based in each case on D,

$d_1$) from 50 to 90% by weight of at least one rubber having a glass transition temperature below 0°C,

$d_2$) from 10 to 49% by weight of at least one vinyl-aromatic monomer of not more than 12 carbon atoms and

$d_3$) from 49 to 1% by weight of a monomer selected from the group consisting of (meth)acrylonitrile and (meth)acrylates having $C_1$-$C_8$-alkyl radicals or a mixture of these monomers.

3. A molding material as claimed in claim 1 or 2, which contains not more than 20 parts by weight, based on 100 parts by weight of A + B + C, of conventional additives (component E).

4. A molding material as claimed in claim 1, 2 or 3, consisting of, based in each case on A + B + C,

A) from 50 to 87% by weight of a copolymer consisting of, based in each case on A,

a1) from 80 to 60% by weight of styrene, $\alpha$-methylstyrene, a styrene derivative alkyl-substituted in the nucleus or a mixture of these monomers and

a2) from 20 to 40% by weight of (meth)acrylonitrile and/or methyl (meth)acrylate,

B) from 10 to 0.5% by weight of a terpolymer consisting of, based in each case on B,

b1) from 90 to 50% by weight of at least one monomer selected from the group consisting of styrene, $\alpha$-methylstyrene, styrenes alkyl-substituted in the nucleus and mixtures of these monomers,

b2) from 5 to 40% by weight of (meth)acrylonitrile and/or methyl (meth)acrylate and

b3) from 5 to 15% by weight of a further monomer

and

C) from 15 to 40% by weight of a reinforcing agent, wherein the terpolymer B contains tert-butyl (meth)acrylate as the further monomer $b_3$).

5. A reinforced thermoplastic molding material as claimed in claim 1, consisting of, based in each case on A + B + C,

A) from 55 to 65% by weight of a copolymer consisting of, based in each case on A,

a1) from 80 to 60% by weight of styrene

and

a2) from 20 to 40% by weight of acrylonitrile,

B) from 10 to 0.5% by weight of a terpolymer consisting of, based in each case on B,

b1) from 85 to 60% by weight of styrene,

b2) from 10 to 30% by weight of acrylonitrile and

b3) from 5 to 15% by weight of a further monomer

and

C) from 20 to 40% by weight of glass fibers, wherein the terpolymer B contains tert-butyl acrylate as the further monomer b3).

6. A process for the preparation of a molding material as claimed in claim 1, 2 or 3 by mixing the components A, B, C and, if required, D or E in the melt.

7. Use of a molding material as claimed in claim 1 for the production of moldings.

**Revendications**

1. Masse à mouler thermoplastique, se composant par rapport à A + B + C de
   A) 40 à 94% en poids d'un copolymère se composant par rapport à A de
      a1) 90 à 50% en poids de styrène, d'α-méthylstyrène, d'un dérivé du styrène alkylé sur le noyau ou de mélanges de ces monomères
      et
      a2) 10 à 50% en poids de (méth)acrylonitrile et/ou de (méth)acrylate de méthyle,
   B) 20 à 0,5% en poids d'un terpolymère constitué par rapport à B de
      b1) 90 à 50% en poids d'au moins un monomère du groupe comprenant le styrène, l'α-méthylstyrène, les styrènes alkylés sur le noyau ou les mélanges de ces monomères.
      b2) 5 à 40% en poids de (méth)acrylonitrile et/ou de (méth)acrylate de méthyle,
      b3) 2 à 30% en poids d'un autre monomère,
   C) 5 à 50% en poids d'un agent de renforcement, caractérisée en ce que le terpolymère B contient comme autre monomère b3) du (méth)acrylate de tert.-butyle.

2. Masse à mouler selon la revendication 1, caractérisée en ce qu'elle contient en outre, pour 100 parties en poids de A + B + C
   1 à 50 parties en poids d'au moins un copolymère greffé D qui est constitué de, par rapport à D,
      d1) 50 à 90% en poids d'au moins un caoutchouc ayant une température de transition vitreuse inférieure à 0°C,
      d2) 10 à 49% en poids d'au moins un monomère vinylaromatique ayant jusqu'à 12 atomes de carbone
      et
      d3) 49 à 1% en poids d'un monomère du groupe comprenant le (méth)acrylonitrile et les esters (méth)acryliques avec des restes alkyle en $C_1$-$C_8$ ou les mélanges de ces monomères.

3. Masse à mouler selon la revendication 1, caractérisée en ce qu'elle contient, pour 100 parties en poids de A + B + C, jusqu'à 20 parties en poids d'additifs usuels (composant E).

4. Masse à mouler selon la revendication 1, 2 ou 3, se composant par rapport à A + B + C de
   A) 50 à 87% en poids d'un copolymère se composent par rapport à A de
      a1) 80 à 60% en poids de styrène, d'α-méthylstyrène, d'un dérivé de styrène alkylé sur le noyau ou de mélanges de ces monomères
      et
      a2) 20 à 40% en poids de (méth)acrylonitrile et/ou de (méth)acrylate de méthyle,
   B) 10 à 0,5% en poids d'un terpolymère constitué par rapport à B de
      b1) 90 à 50% en poids d'au moins un monomère du groupe comprenant le styrène, l'α-méthylstyrène, les styrènes alkylés sur le noyau ou les mélanges de ces monomères.
      b2) 5 à 40% en poids de (méth)acrylonitrile et/ou de (méth)acrylate de méthyle,
      b3) 5 à 15% en poids d'un autre monomère,
   C) 15 à 40% en poids d'un agent de renforcement, caractérisée en ce que le terpolymère B contient comme autre monomère b3) du (méth)acrylate de tert.-butyle.

5. Masse à mouler thermoplastique renforcée selon la revendication 1, se composant par rapport à A + B + C de
   A) 55 à 65% en poids d'un copolymère se composant par rapport à A de
      a1) 80 à 60% de styrène
      et
      a2) 20 à 40% en poids d'acrylonitrile.
   B) 10 à 0,5% en poids d'un terpolymère constitué de, par rapport à B,
      b1) 85 à 60% en poids de styrène
      b2) 10 à 30% en poids d'acrylonitrile
      b3) 5 à 15% en poids d'un autre monomère,
   C) 20 à 40% en poids de fibres de verre,
   caractérisée en ce que le terpolymère B contient comme autre monomère b3) de l'acrylate de tert.-butyle.

6. Procédé de préparation de masses à mouler selon les revendications 1, 2 ou 3, par mélange à l'état fondu des composants A, B, C et éventuellement D ou E.

**7.** Utilisation des masses à mouler selon la revendication 1 pour la préparation de pièces moulées.